# FASCICULE DE BREVET EUROPEEN

(11) **EP 2 949 070 B1**
(45) Date de publication et mention de la délivrance du brevet: **25.11.2020**
(21) Numéro de dépôt: 14703151.2
(22) Date de dépôt: 15.01.2014
(51) Int. Cl.: H04L 9/32

(54) **PROCÉDÉ DE VÉRIFICATION DE L'INTÉGRITÉ D'UN BLOC DE DONNÉES NUMÉRIQUES**
VERFAHREN ZUR NACHPRÜFUNG DER INTEGRITÄT EINES NUMMERISCHEN DATENBLOCKS
VERIFICATION PROCESS OF THE INTEGRITY OF NUMERICAL DATA BLOC

(30) Priorité: 22.01.2013 FR 1350549
(43) Date de publication de la demande: 02.12.2015
(73) Titulaire: Université d'Aix-Marseille, 13007 Marseille (FR); Centre National de la Recherche Scientifique (C.N.R.S.), 75016 Paris (FR)
(72) Inventeur: HENOCQUE, Laurent, F-13013 Marseille (FR)
(74) Mandataire: de Roquemaurel, Bruno
(86) Numéro de dépôt international: PCT/FR2014/050073
(87) Numéro de publication internationale: WO 2014/114861

(56) Documents cités:
- EP-A1- 1 986 119
- US-A1- 2002 194 209
- US-A1- 2003 018 688
- US-A1- 2005 283 489
- US-A1- 2008 222 414
- US-A1- 2009 171 878
- US-B1- 7 774 320
- YAN ZHU ET AL: "Cooperative Provable Data Possession for Integrity Verification in Multicloud Storage", IEEE TRANSACTIONS ON PARALLEL AND DISTRIBUTED SYSTEMS, IEEE SERVICE CENTER, LOS ALAMITOS, CA, US, vol. 23, no. 12, 1 décembre 2012 (2012-12-01), pages 2231-2244, XP011470636, ISSN: 1045-9219, DOI: 10.1109/TPDS.2012.66
- Satoshi Nakamoto: "Bitcoin: A Peer-to-Peer Electronic Cash System", , 31 October 2008 (2008-10-31), pages 1-9, XP055387899, Retrieved from the Internet: URL:http://nakamotoinstitute.org/static/do cs/bitcoin.pdf [retrieved on 2017-07-04]
- Danielle Drainville: "An Analysis of the Bitcoin Electronic Cash System", , 21 December 2012 (2012-12-21), XP055654308, Waterloo Retrieved from the Internet: URL:https://pdfs.semanticscholar.org/f7e3/ 3271bc73b1ae8501aa3776f9fb72695edffe.pdf [retrieved on 2019-12-19]

## Description

### Domaine technique général

La présente invention se rapporte de manière générale aux procédés de vérification de l'intégrité et de l'authenticité de blocs de données numériques et d'accès à ces blocs de données, que ceux-ci soient distribués sur un réseau ou stockés sur un support de mémorisation.

### Définitions

Dans la présente description, les termes et expressions suivantes doivent être compris comme suit.

"Bloc de données" désigne tout fichier ou document numérique ou toute partie d'un tel fichier ou document, le terme fichier ne devant pas être compris comme limité à un fichier d'un système de gestion de fichiers.

"Métadonnée" d'un bloc de données désigne non pas une donnée de contenu du bloc, mais une donnée relative à ce contenu, ou à une autre métadonnée. Il s'agit donc de méta-contenu, et non de données de structure spécifiant notamment l'emplacement, la nature de chaque métadonnée et sa structure éventuelle.

"Empreinte numérique" d'un bloc de données désigne une donnée produite par une fonction permettant de garantir l'intégrité du bloc de données, de sorte que si un bit du bloc de donnée est modifié, l'empreinte numérique sera modifiée. Cette fonction peut être une fonction de hachage, mais pas nécessairement. Une empreinte numérique est parfois nommée clé de hachage, somme de contrôle, empreinte, hash, résumé de message, condensé, condensat ou encore empreinte cryptographique.

"Signature numérique" désigne une empreinte numérique chiffrée à l'aide d'une clé privée d'une paire de clés publique/privée et d'un programme cryptographique asymétrique tel que "pgp" (Pretty Good Privacy) ou son pendant libre "gpg" (Gnu Privacy Guard). Une signature numérique permet de garantir l'intégrité d'un bloc de données et d'en authentifier le signataire, par analogie avec la signature manuscrite d'un document papier. A noter qu'une signature numérique ayant les propriétés d'une empreinte numérique peut être obtenue en appliquant un programme de chiffrement asymétrique directement au bloc de données.

"Insertion réalisée de manière contrôlée" désigne une insertion de donnée quelle qu'elle soit dans un bloc de données, en un emplacement que l'utilisateur peut choisir aussi librement que le permet le type de bloc de données concerné. Toutefois, ceci n'exclut pas que le choix de cet emplacement puisse être réalisé par un programme, ou être normalisé.

"Insertion réalisée de manière non-destructive" désigne une insertion d'une donnée quelle qu'elle soit dans un bloc de données, réalisée sans affecter les propriétés du bloc de données, c'est-à-dire qu'il peut être ouvert, affiché, imprimé, exécuté, etc. par les mêmes outils qu'avant cette insertion.

### Etat de la technique

Il est connu de l'état de l'art les documents:
US2009171878 qui décrit une méthode de vérification prouvable de l'intégrité de données dans laquelle les données sont d'abord tatouées par un client et ensuite envoyées avec les données à un système d'archivage.
Le document XP055387899 Bitcoin A Peer-to-Peer Electronic Cash System décrit un système de chainage de bloc de données et de vérification de leurs intégrité .

Dans le contexte de l'intégrité et de l'authenticité de blocs de données, une double problématique se pose qui consiste à savoir :
- comment atteindre ces blocs de données, et
- comment être certain qu'un bloc de données trouvé est bien celui que l'on cherche.

Actuellement, cette double problématique est résolue selon plusieurs modes. Selon un premier mode, l'emplacement exact attendu du bloc de données, emplacement que nous appelons l'adresse du bloc de données, est connu. Cette adresse est soit un chemin d'accès à un fichier dans les répertoires d'un système de gestion de fichiers (par exemple : C:\Mes Documents\test.txt), soit une adresse URL (pour Uniform Resource Locator) indiquant un chemin d'accès à une page sur le réseau (par exemple : html://un-site.com/documents/test.txt), ce chemin d'accès pouvant être notamment fourni sous la forme d'un lien hypertexte dans une page Web. Selon ce premier mode, plusieurs cas apparaissent dont les deux cas suivants.

Selon un premier cas, le bloc de données est trouvé à l'adresse connue comme attendu. Il importe alors de s'assurer que le bloc de données trouvé est bien celui recherché ; par exemple, il importe de s'assurer que le bloc de données trouvé est fidèle à une version de ce bloc dont on se rappelle, ou que l'on a utilisée, et référencée dans le passé, ou une version consultée par l'émetteur éventuel de l'adresse.

Selon un deuxième cas, le bloc de données recherché n'est pas trouvé à l'adresse connue ; ce deuxième cas renvoie au deuxième mode présenté ci-après.

Selon un deuxième mode, l'emplacement exact attendu du bloc de données n'est pas connu. En revanche, on connait un ou plusieurs mots clés ou fragments de phrases, utilisés dans le nom, l'adresse ou le contenu du bloc de données, qui peuvent avoir été indexés par un moteur d'indexation afin d'être utilisés pour retrouver ce bloc de données par un moteur de recherche (sur un disque dur ou sur internet). Effectivement, la recherche de blocs de données via un moteur d'indexation ou de recherche est devenue un outil et un mode de travail et d'accès à l'information privilégiés. Une part importante de l'activité cognitive moderne repose sur la capacité à identifier et agréger des documents découverts sur le réseau ou sur un disque dur sans en connaître ni le nom, ni l'emplacement exact. L'indexation de documents est donc au cœur de l'utilisation actuelle de l'information, aussi bien sur internet que dans un ordinateur. Cette indexation se fait le plus souvent par le biais de mots clés issus du langage naturel utilisé dans le document (par exemple, des mots du français : "location voiture Marseille" ; des mots issus d'un langage de programmation : "getlmage"). Egalement, les ordinateurs, tablettes numériques et téléphones mobiles proposent aujourd'hui des moteurs d'indexation internes permettant de retrouver des documents, notes, contacts, messages, etc. au moyen de recherches par mots clés. De même, les dispositifs de stockage de documents virtualisés ("Cloud") offrent des mécanismes de recherche de documents par mots clés et par indexation de contenu (Wuala, iCloud...).

Selon ce deuxième mode, une base de données est donc utilisée pour mémoriser les correspondances entre les index et les adresses des blocs de données, de sorte qu'une recherche fournit en tant que résultat, une liste d'adresses de blocs de données.

De nouveau, plusieurs cas se présentent dont les quatre cas suivants. Selon un premier cas, la liste d'adresses est vide. Une nouvelle recherche peut toujours être lancée avec un critère de recherche différent. Toutefois, si le nom ou l'adresse du bloc de données d'origine a changé, il est possible que l'adresse d'accès au bloc de données via une recherche des index d'origine connus soit définitivement perdue. Il en résulte que le bloc de données est introuvable, bien qu'il puisse encore exister.

Selon un deuxième cas, la liste comprend un ensemble conséquent d'adresses de blocs de données, et la recherche peut être affinée par ajout d'index obtenus par exemple par analyse de certains des blocs de données trouvés.

Selon un troisième cas, une adresse est sélectionnée à laquelle un bloc de données est trouvé. Il importe alors de s'assurer que le bloc de données trouvé est bien celui recherché. Garantir l'authenticité du document ou bloc de données trouvé sur la base de ses seuls adresse et contenu reste alors impossible.

Selon un quatrième cas, une adresse est sélectionnée dans la liste, mais aucun bloc de données ne s'y trouve, par exemple en raison d'un décalage survenu entre les mises à jour de la base de données et une évolution du système de stockage. L'adresse suivante dans la liste peut alors être sélectionnée, mais il n'existe aucun moyen de savoir si le bloc de données manquant à la première adresse sélectionnée n'était pas l'unique exemplaire du bloc de données exactement conforme à celui recherché.

Outre les quelques insuffisances relevées ci-dessus des moteurs d'indexation ou de recherche, il demeure que, dans l'état actuel, les index ne suffisent pas à identifier les blocs de données relatifs à des activités ou concepts très spécifiques, ce qui impose le recours à des bases de données et services spécialisés. Par exemple, publier une annonce de voiture, un tweet ou un billet de blog, une information relative à un vol d'avion, un commentaire sur une photographie, un article de presse, une information boursière, un article de recherche, etc. ne peut se faire dans le creuset global des données accessibles aux moteurs d'indexation et de recherche. Pour chacun de ces usages, un site Web dédié est nécessaire (par exemple topannonces, twitter, facebook, flickr, boursorama, citeseer, etc.). La sémantique précise des blocs de données ne peut donc actuellement être définie que par des sites internet dédiés à des domaines ou services spécifiques (par exemple un site de location de voitures, un site recensant l'aide en ligne pour des outils de programmation, un site "dictionnaire" recensant des ontologies pour le Web sémantique).

En outre, les moteurs de recherche donnent une présentation des résultats qui est ordonnée selon des algorithmes de préférence basés sur notamment un calcul de popularité. Dans ce contexte, il peut être impossible d'atteindre des résultats pertinents pour une recherche donnée si ceux-ci sont proposés à des rangs très éloignés de ceux des premiers résultats.

Pour vérifier l'identité ou l'authenticité de façon quasi certaine d'un bloc de données, il est connu de lui associer une ou plusieurs empreintes et/ou signatures numériques. Cela a cependant de nombreux inconvénients car ces opérations de vérification nécessitent de télécharger, outre le bloc de données proprement dit, diverses empreintes telles que notamment, "crc", "md5", "shal", etc., ou diverses signatures numériques ("pgp", "gpg"), puis d'utiliser autant d'outils (par exemple, "shasum", "md5sum", "gpg", openssl, etc.) avec divers paramètres, pour effectuer, de façon souvent manuelle, ces vérifications. Pour ce faire, la solution actuelle consiste à publier des fichiers d'empreintes et/ou de signatures indépendants des blocs de données qu'ils certifient ou à créer des pages Web contenant les signatures en texte lisible, ces dernières devant être copiées par l'utilisateur, puis collées via une commande logicielle complexe. En raison de la diversité des outils et paramètres, ce processus ne peut pas être automatisé de façon universelle.

La recherche de blocs de données n'est pas seulement un problème d'usage humain, mais relève également de l'automatisation à laquelle la situation actuelle fait largement obstacle. Par exemple, dans le cadre du Web sémantique, il importe de caractériser de manière certaine une ontologie et ses instances devant être transformées, transmises entre services Web, etc.

Des outils automatiques de génération de code (compilateurs, makefiles) sont dans certains cas conçus de manière à vérifier automatiquement que les blocs de données utilisés sont bien ce qu'ils prétendent être. L'approche actuelle consiste à créer un fichier contenant les empreintes des fichiers programme sources et des archives, puis de faire en sorte que l'outil de génération de code vérifie la validité des empreintes avec un outil cryptographique standard ("md5sum", "shasum"). Ce processus n'est pas généralisable à Internet et n'est possible que dans un éventail de cas très limité, par exemple pour la validation et la compilation de blocs de programmes (ou packages) Unix.

Par ailleurs, les outils "gpg" ou "pgp" comportent un mode de signature appelé "clearsign", selon lequel un bloc de données se trouve inséré ou encadré entre deux zones de texte contenant des balises ou entre deux sections de métadonnées, conjointement avec une signature. Dans ce cas, la signature est insérée dans le bloc de données. Le bloc de données est ainsi modifié de façon destructive. En effet, les zones de texte ou les sections de métadonnées créent une interférence avec les outils habituels d'utilisation du bloc de données, rendant cette utilisation impossible ou significativement altérée. Par exemple, si le bloc de données d'origine est un fichier binaire, un programme ou un code source, l'insertion d'une signature le rend inutilisable, inexécutable ou non compilable. Si le bloc de données d'origine (avant insertion de la signature) est un fichier texte ou une page HTML, son affichage est significativement altéré. Par conséquent, la technologie actuelle d'insertion de signatures "pgp" en texte clair avec l'option "clearsign" ne respecte pas la sémantique des documents, qui peuvent alors devenir inutilisables par leurs outils habituels.

La situation actuelle pose donc un grand nombre de problèmes, auxquels l'invention tente de répondre de manière unifiée. Il est plus particulièrement proposé une solution qui permette notamment de :
- garantir qu'un bloc de données trouvé est bien celui que l'on cherchait,
- identifier de façon certaine l'auteur d'un bloc de données,
- se prémunir de la perte d'accès à un bloc de données du fait de son changement de nom ou d'adresse,
- accéder à un ensemble de blocs de données relatifs à un concept précis, cet ensemble étant limité aux seuls résultats pertinents, sans nécessiter un site Web dédié,
- faire relever d'un concept identique des blocs de données rédigés dans des langues distinctes,
- caractériser de manière certaine les ontologies et leurs instances utilisées dans le contexte du Web sémantique, et/ou
- automatiser la vérification des empreintes et signatures attachées à un bloc de données.

Actuellement, une empreinte ou signature ne peut pas être insérée dans un bloc de données sans que sa valeur ne s'en trouve modifiée. Un bloc de données ne peut donc contenir ses propres empreintes ou signatures valides. Une empreinte ou signature ou une partie de celle-ci ne peut donc pas être utilisée à la fois comme élément d'identification ou d'authentification et comme critère de recherche d'un bloc de données indexé par les moteurs de recherche. En effet, même si une recherche à partir d'une empreinte ou signature peut permettre de trouver l'adresse d'une page Web proposant des liens vers des blocs de données, rien ne permet de déterminer de manière immédiate le bloc de données susceptible de correspondre à cette signature. De plus, une fois un bloc de données trouvé, vérifier que ce bloc est conforme à la signature est une opération fastidieuse.

Ces difficultés proviennent de ce que l'information nécessaire pour identifier ou authentifier un bloc de données doit rester extérieure à ce bloc. Chaque donnée d'identification ou d'authentification doit être fournie séparément (dans un fichier indépendant ou dans une base de données), et en l'absence de cette information, plus rien ne permet de certifier que le bloc de données est bien ce qu'il prétend être. En outre, les informations fournies le cas échéant dans des fichiers numériques séparés du bloc de données lui-même peuvent de ce fait être corrompues par un tiers ou frauduleusement accessibles au moyen d'artifices.

Outre le besoin exprimé plus haut d'une solution pour l'insertion d'une empreinte ou une signature dans un bloc de données de manière contrôlée et éventuellement non-destructive, il existe donc un réel besoin de développer un programme logiciel capable de vérifier et/ou mettre à jour automatiquement cette empreinte ou signature et plus généralement des métadonnées d'un bloc de données. Il peut être souhaitable que ce logiciel soit capable d'exploiter automatiquement ces métadonnées pour effectuer des validations en cascade (ou récursives) d'une pluralité de blocs de données, ou encore capable d'exploiter, via son propre code source, ses propres métadonnées et/ou celles de programmes associés.

### Description de l'invention

Des modes de réalisation concernent un procédé de vérification de l'intégrité d'un bloc de données numériques, le procédé comprenant des étapes consistant à : rechercher, dans un premier bloc de données, une empreinte numérique d'identification du premier bloc de données, au moyen d'un premier repère, si l'empreinte d'identification du premier bloc de données est trouvée dans le premier bloc de données, calculer une empreinte numérique du premier bloc de données en appliquant la fonction de calcul d'empreinte au premier bloc de données, l'empreinte calculée du premier bloc de données ayant une valeur dépendant de chacun des bits du premier bloc de données en excluant les bits de l'empreinte d'identification trouvée dans le premier bloc de données, et vérifier l'empreinte d'identification trouvée dans le premier bloc de données en la comparant à l'empreinte calculée du premier bloc de données, une comparaison fausse révélant que le premier bloc de données a été modifié depuis que l'empreinte d'identification a été insérée dans le premier bloc de données, ou que l'empreinte d'identification a été calculée en appliquant une autre fonction de calcul d'empreinte au premier bloc de données.

Selon un mode de réalisation, le premier bloc de données comprend un lien de référence formé à partir d'une autre empreinte d'identification présente dans un second bloc de données, et ayant une valeur dépendant de chacun des bits du second bloc de données en excluant les bits de l'autre empreinte d'identification.

Selon un mode de réalisation, le procédé comprend des étapes consistant à : rechercher, dans un troisième bloc de données, une empreinte numérique d'identification du troisième bloc de données, au moyen d'un second repère, si l'empreinte d'identification du troisième bloc de données est trouvée dans le troisième bloc de données, calculer une empreinte numérique du troisième bloc de données en appliquant la première fonction calcul d'empreinte au troisième bloc de données, l'empreinte calculée du troisième bloc de données ayant une valeur dépendant de chacun des bits du troisième bloc de données en excluant les bits de l'empreinte d'identification trouvée dans le troisième bloc de données, et introduire l'empreinte calculée du troisième bloc de données dans le troisième bloc de données en un emplacement déterminé par le second repère dans le troisième bloc de données.

Selon un mode de réalisation, le procédé comprend des étapes de génération d'un bloc de données vérifiable, consistant à : rechercher un emplacement d'insertion d'empreinte dans un bloc de données initial, calculer une troisième empreinte numérique du bloc de données vérifiable en appliquant la fonction calcul d'empreinte au bloc de données initial, la troisième empreinte calculée du bloc de données vérifiable ayant une valeur dépendant de chacun des bits du bloc de données initial, et générer le bloc de données vérifiable en introduisant la troisième empreinte calculée du bloc de données vérifiable en tant qu'empreinte d'identification du bloc de données vérifiable, à l'emplacement d'insertion trouvé dans le bloc de données initial.

Selon un mode de réalisation, le calcul de chaque empreinte comprend une étape d'insertion d'une donnée prédéfinie dans le bloc de données avant d'appliquer la fonction de calcul d'empreinte au bloc de données.

Selon un mode de réalisation, un bloc de données comprend une empreinte d'identification introduite en plusieurs emplacements dans le bloc de données, l'empreinte d'identification du bloc de données étant calculée en excluant les bits de l'empreinte d'identification dans tous les emplacements de l'empreinte d'identification dans le bloc de données.

Selon un mode de réalisation, le procédé comprend plusieurs étapes de calcul d'une empreinte d'un bloc de donnée et d'introduction de l'empreinte calculée dans le bloc de données en conservant les empreintes déjà insérées dans le bloc de données.

Selon un mode de réalisation, le procédé comprend une étape de lecture d'une information utile à la localisation et/ou au calcul d'une empreinte d'identification, figurant dans un bloc de données contenant l'empreinte d'identification.

Selon un mode de réalisation, le lien de référence formé à partir de l'empreinte d'identification présente dans le second bloc de données permet de construire au moins en partie l'empreinte d'identification présente dans le second bloc de données.

Selon un mode de réalisation, l'un des blocs de données comprend une métadonnée comprenant une partie variable exclue du calcul d'empreinte appliqué au bloc de données pour calculer l'empreinte d'identification du bloc de données.

Selon un mode de réalisation, l'empreinte d'identification du bloc de donnée se trouve dans la partie variable d'une métadonnée d'identification.

Selon un mode de réalisation, au moins une partie de l'empreinte d'identification introduite dans chaque bloc de données est utilisée par un moteur d'indexation ou comme mot clé de recherche par un moteur de recherche.

Selon un mode de réalisation, l'un des blocs de données est au moins une partie d'un fichier de code exécutable d'un programme, et l'empreinte d'identification du bloc de données, calculée sur le bloc de données est introduite dans le bloc de données en un emplacement permettant au programme d'exploiter l'empreinte d'identification du bloc de données.

Selon un mode de réalisation, l'introduction de chaque empreinte d'identification dans un bloc de données est effectuée en un emplacement dans le bloc de données, choisi pour ne pas modifier les conditions d'utilisation attendues du bloc de données par un programme logiciel.

Selon un mode de réalisation, l'empreinte d'identification insérée dans un bloc de données est une signature numérique générée par un calcul cryptographique asymétrique utilisant une clé privée d'une paire de clés publique/privée, et la vérification d'empreinte comprend une étape de déchiffrement de la signature numérique trouvée dans le bloc de données, avec la clé publique de la paire de clés publique/privée, la clé publique pouvant se trouver dans une métadonnée du bloc de donnée.

Des modes de réalisation concernent également un produit programme d'ordinateur comprenant des portions de fichier de programme enregistrées sur un support lisible par un ordinateur, pour mettre en œuvre les étapes du procédé défini précédemment.

Selon un mode de réalisation, au moins une partie du programme est inclus dans l'un des blocs de données.

Des modes de réalisation concernent également un ensemble de fichiers enregistrés sur un support lisible par un ordinateur, dans lequel chaque fichier contient une empreinte numérique d'identification du fichier, l'empreinte d'identification du fichier étant localisable dans le fichier au moyen d'un repère, l'empreinte d'identification ayant une valeur calculée en appliquant une fonction de calcul d'empreinte au fichier, la valeur de l'empreinte d'identification dépendant de chacun des bits du fichier en excluant les bits de l'empreinte d'identification du fichier, présente dans le fichier, l'intégrité de chaque fichier de l'ensemble de fichiers étant vérifiable à l'aide du procédé défini précédemment, chaque fichier étant considéré comme un bloc de données.

Selon un mode de réalisation, au moins l'un des fichiers comprenant un lien de référence formée à partir d'une empreinte d'identification d'un autre fichier de l'ensemble, le lien de référence figurant dans l'un des fichiers de l'ensemble, étant obtenue en modifiant d'une manière réversible une des empreintes d'identification des fichiers de l'ensemble, pour distinguer le lien de référence des empreintes d'identification.

Selon un mode de réalisation, l'ensemble de fichiers comprend un fichier de liaison contenant deux liens de référence formés à partir d'empreintes d'identification de deux autres fichiers de l'ensemble, pour établir un lien entre les deux autres fichiers.

D'autres avantages pourront encore apparaître à l'homme du métier à la lecture des exemples ci-dessous, illustrés par les figures annexées, donnés à titre illustratif.

### Brève description des figures

La figure 1 représente des étapes d'un procédé comprenant le cas échéant, une phase d'insertion (a), une phase de vérification (b) et une phase de mise à jour (c) d'une empreinte dans un bloc de données numériques, selon un mode de réalisation.
- La figure 2 représente schématiquement un bloc de données à différentes étapes de la phase d'insertion (a).
- La figure 3 représente schématiquement le bloc de données à différentes étapes de la phase de vérification (b).
- La figure 4 représente schématiquement le bloc de données à différentes étapes de la phase de mise à jour (c).
- La figure 5 représente des étapes d'un procédé comprenant le cas échéant, une phase d'insertion (a'), une phase de vérification (b') et une phase de mise à jour (c') d'une empreinte dans un bloc de données numériques, selon un autre mode de réalisation.
- La figure 6 représente schématiquement un bloc de données à différentes étapes de la phase d'insertion (a').
- La figure 7 représente schématiquement le bloc de données à différentes étapes de la phase de vérification (b').
- La figure 8 représente schématiquement le bloc de données à différentes étapes de la phase de mise à jour (c').
- Les figures 9 et 10 représentent des exemples d'ensembles structurés de blocs de données.

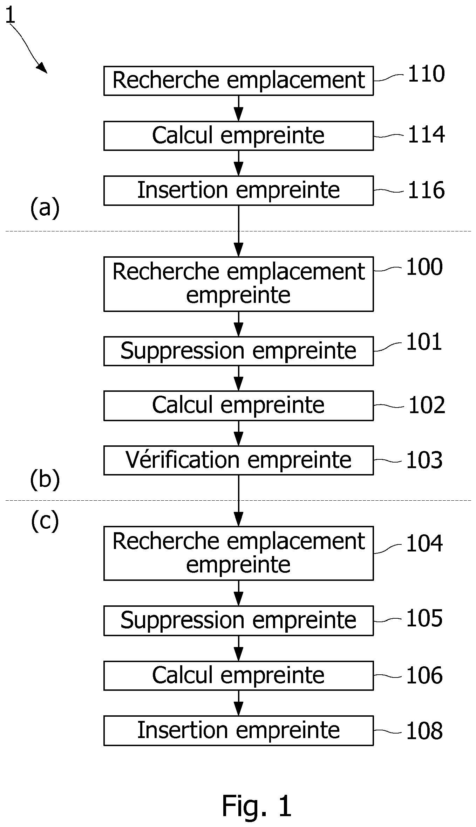

La figure 1 représente des étapes d'un procédé 1 comprenant le cas échéant, une phase d'insertion (a) 110, 114, 116 d'une empreinte dans un bloc de données numériques, une phase de vérification (b) 100, 102, 103 de cette empreinte, et une phase de mise à jour (c) 104, 105, 106, 108 de cette empreinte, selon un mode de réalisation.

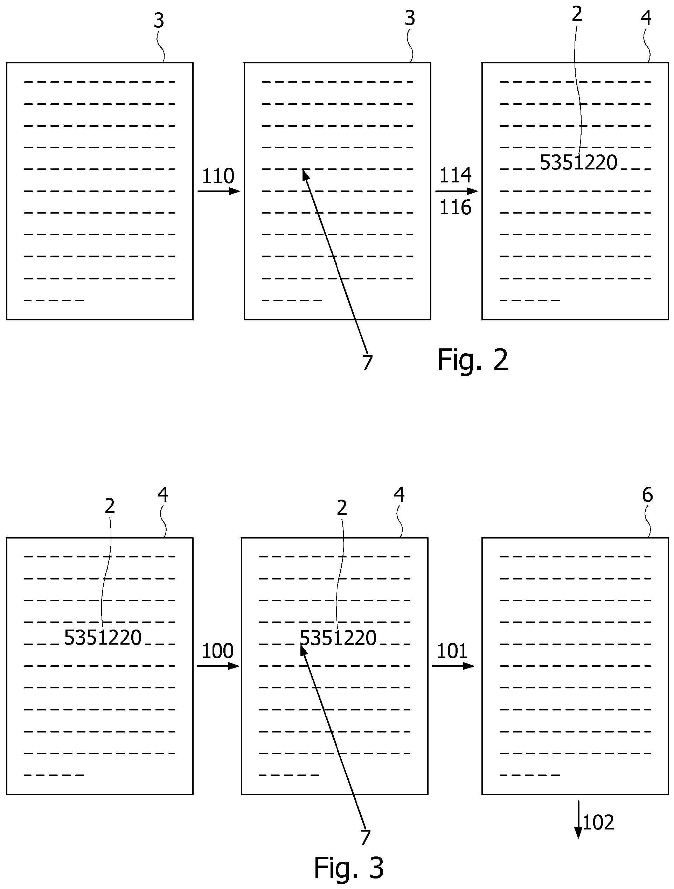

La figure 2 représente un bloc de données 3, 4 avant, durant et après insertion d'une empreinte 2 dans le bloc. L'insertion d'une empreinte dans un bloc de données comprend les étapes suivantes :
- la recherche 110 au moyen d'un repère 7 d'un emplacement dans le bloc de données 3, où une empreinte peut être insérée de manière non destructive,
- le calcul 114 de l'empreinte à partir du bloc de données 3, l'empreinte calculée ayant une valeur dépendant de chacun des bits du bloc de données 3, et
- l'insertion 116 dans le bloc de données 3 de l'empreinte 2 (égale à "5351220" dans l'exemple de la figure 2) calculée à l'étape 114 pour obtenir un bloc de données 4 identifiable par son empreinte 2.

L'empreinte peut être insérée par exemple, dans un commentaire de programme, dans une section du bloc de donnée destinée à recevoir des métadonnées en texte clair (pdf, jpg), ou à la fin d'un fichier binaire (zip, exe).
En permettant le placement d'une empreinte dans le bloc de données sous le contrôle du programmeur/utilisateur, le procédé 1 permet de préserver la sémantique du bloc de données.

L'empreinte 2 est donc bien comprise dans le bloc de données 4. Or la technologie actuelle ne permet pas d'insérer ou modifier, dans un bloc de données, une empreinte sans provoquer un changement de valeur de l'empreinte calculée à partir du bloc de données. Dans ce contexte, le procédé selon ses étapes d'insertion 110, 114 et 116 permet avantageusement d'insérer une empreinte dans le bloc de données concerné, tout en définissant une norme de modification stable et donc reproductible du bloc de données permettant de retrouver la valeur originale du bloc de données via une étape de suppression de l'empreinte. Ainsi, par cette modification, il est possible de retrouver la valeur du bloc de données à partir de laquelle l'empreinte est supposée avoir été calculée. Il est à noter que cette modification est indépendante d'un format du bloc de données ou de choix techniques faits par les concepteurs d'un format numérique.

En outre, l'utilisateur du bloc de données 4 peut choisir librement le point d'insertion de l'empreinte 2, ce qui lui donne un contrôle total sur l'intégrité du bloc de données 4 ainsi instrumenté, et lui permet de choisir la fonction que jouera cette empreinte 2 dans le bloc de données 4. Par exemple, si le bloc de données 4 est un programme, l'empreinte peut être une chaine de caractères assignée à une variable du programme, ou insérée sous la forme d'un commentaire de programme, etc.

Il est par ailleurs à noter que pour certains formats de documents binaires, l'insertion (a) peut être réalisée dans une zone de texte présente en clair dans le document final si l'on veut profiter des avantages de l'invention liés à l'indexation.

La figure 3 représente le bloc de données avant et pendant une vérification d'empreinte d'un bloc de données. Tel qu'illustré par les figures 1 et 3, la vérification du bloc de données comprend les étapes suivantes :
- rechercher 100 une empreinte numérique 2 dans le bloc de données, au moyen d'un repère 7,
- générer 101 un bloc de données modifié 6 en supprimant du bloc de données l'empreinte 2 trouvée dans le bloc de données,
- calculer 102 une empreinte numérique en appliquant la fonction de calcul d'empreinte au bloc de données modifié 6, l'empreinte calculée ayant une valeur dépendant de chacun des bits du bloc de données modifié 6, et
- vérifier 103 l'empreinte trouvée 2 (égale à "5351220" dans l'exemple de la figure 3) dans le bloc de données en la comparant à l'empreinte calculée.

Ainsi, la vérification du bloc de données consiste plus particulièrement en la suppression 101 de l'empreinte 2 dans le bloc de données 4, pour obtenir en premier lieu un bloc de données modifié 6. Ce bloc de données modifié 6 est éventuellement uniquement temporaire. En effet, il suffit qu'il soit conservé juste pour mettre en œuvre l'étape suivante du procédé 1 qui consiste à calculer 102 l'empreinte à partir du bloc de données modifié 6 durant l'étape de suppression 101. L'étape de vérification 103 consiste à comparer l'empreinte trouvée dans le bloc de données à l'étape 100 avec l'empreinte calculée à l'étape 102.

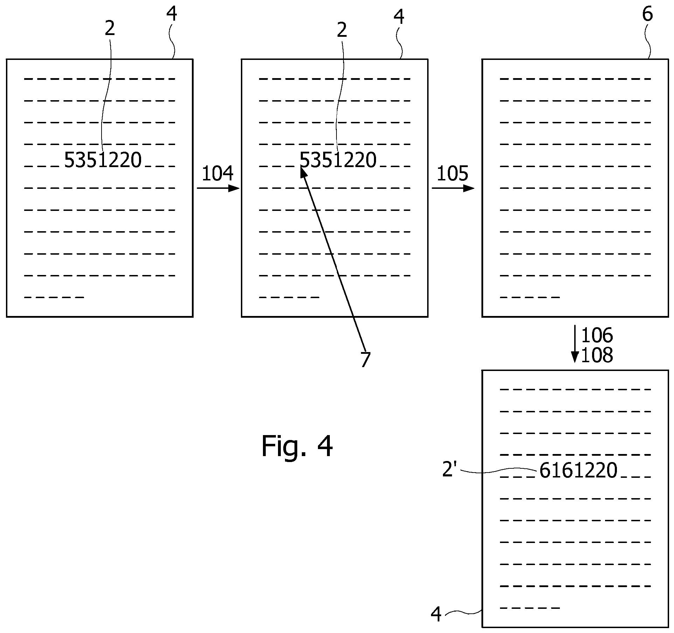

La figure 4 représente le bloc de données avant et pendant une mise à jour de l'empreinte d'un bloc de données. Tel qu'illustré sur les figures 1 et 4, le procédé de vérification 1 peut en outre comprendre les étapes suivantes :
- rechercher 104 une empreinte 2 dans le bloc de données 4, au moyen du repère 7,
- générer 105 un bloc de données modifié 6 en supprimant du bloc de données 4 l'empreinte 2 (égale à "5351220" dans l'exemple de la figure 4) trouvée à l'étape 104,
- calculer 106 une empreinte numérique 2' en appliquant la fonction calcul d'empreinte au bloc de données modifié 6, l'empreinte calculée ayant une valeur dépendant de chacun des bits du bloc de données modifié, et
- insérer 108 l'empreinte calculée 2' (égale à "6161220" dans l'exemple de la figure 4) dans le bloc de données modifié 6 à l'emplacement de l'empreinte supprimée du bloc de données.

Le procédé permet ainsi de mettre à jour l'empreinte (2 remplacée par 2') d'un bloc de données notamment lorsque le contenu du bloc de données a été modifié.

L'étape de vérification 103 du procédé 1 permet à l'utilisateur de se protéger contre toute modification d'un bloc de données 4, ou du moins de détecter toute modification d'un bloc de données 4 par comparaison de l'empreinte 2 figurant dans le bloc de données, à l'empreinte calculée à partir du bloc de données modifié 6. Ainsi, le procédé 1 correspond à un procédé d'identification, de vérification d'intégrité et d'authentification d'un bloc de données au sein duquel une empreinte a été insérée de manière contrôlée et éventuellement non-destructive. Le procédé permet de retrouver par suppression de l'empreinte contenue dans le bloc de données, la valeur du bloc de données à partir de laquelle l'empreinte est supposée avoir été calculée, puis de vérifier si cette supposition est juste ou si elle est fausse par comparaison de l'empreinte supprimée à l'empreinte calculée à partir du bloc de données modifié 6 suite à la suppression. Si la comparaison est juste, le bloc de données 4 n'a pas été modifié depuis l'insertion de l'empreinte 2. Si la comparaison est fausse, le bloc de données 4 est corrompu ou a simplement été modifié.

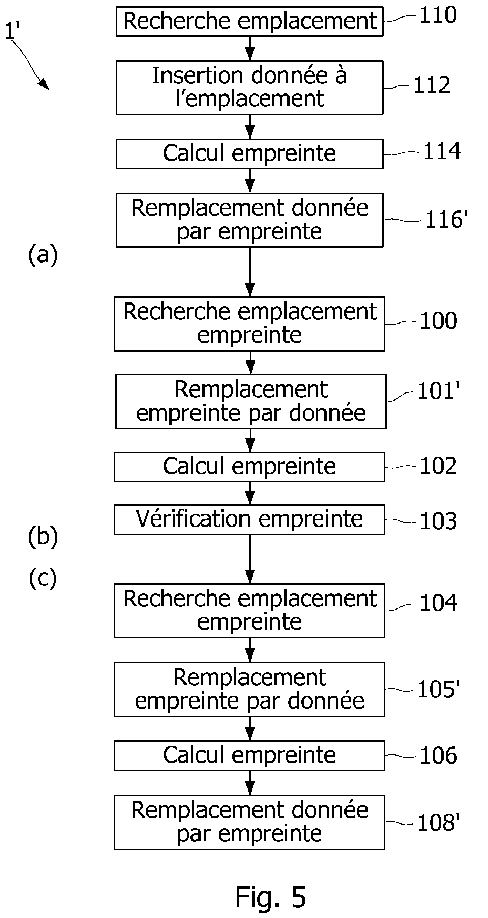

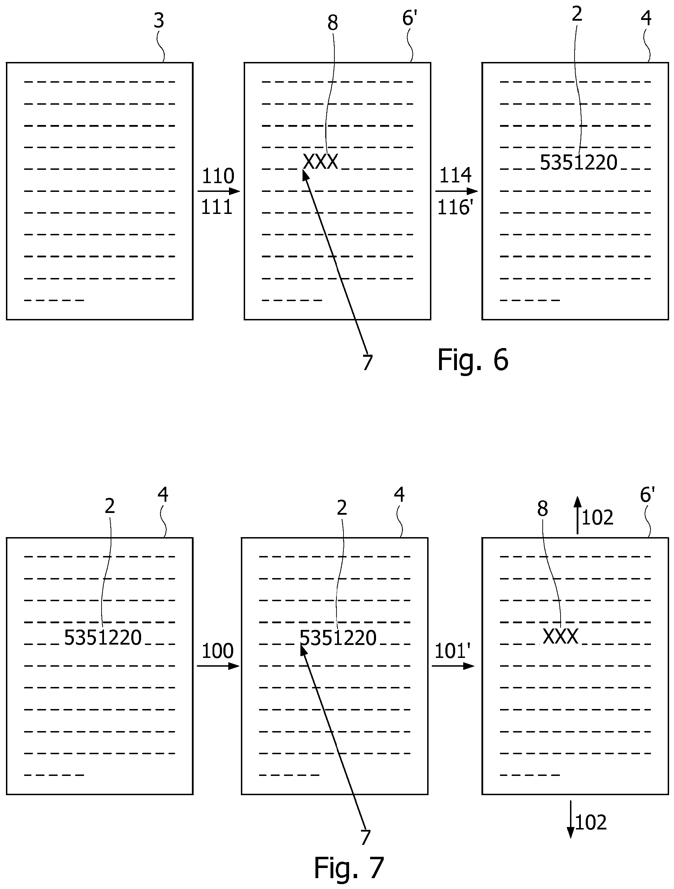

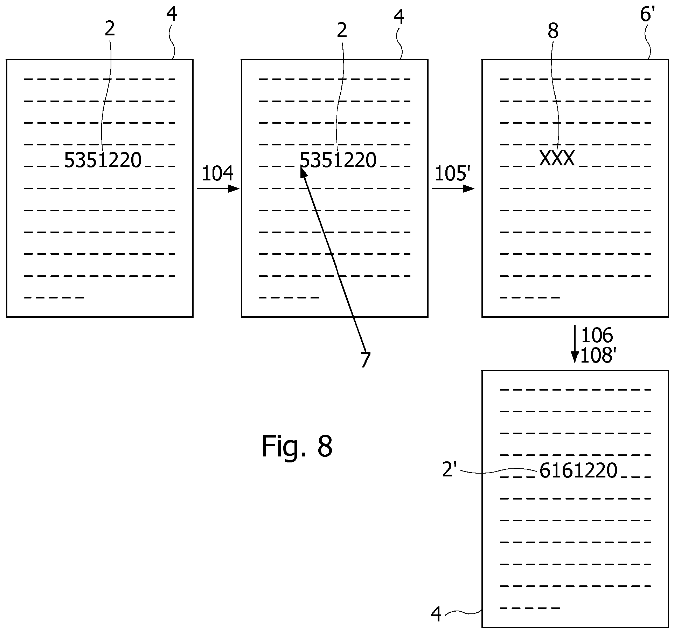

A noter que les étapes 102, 106, 114 de calcul d'empreinte peuvent être précédées d'une étape d'insertion d'une donnée prédéfinie à l'emplacement d'insertion d'empreinte trouvé aux étapes 100, 104 et 110. Ainsi les figures 5 à 8 diffèrent respectivement des figures 1 à 4, en ce qu'une telle donnée prédéfinie 8 est insérée dans le bloc de donnée avant calcul de l'empreinte. Le procédé 1' de la figure 5 diffère du procédé 1 de la figure 1 en ce que les étapes de suppression d'empreinte 101, 105 sont remplacées par des étapes de remplacement 101', 105' de l'empreinte trouvée 2 par la donnée 8 (ou sont suivies d'une étape d'insertion de la donnée 8), l'étape 114 de calcul d'empreinte est précédée d'une étape 112 d'insertion de la donnée 8 à l'emplacement trouvé à l'étape 110, et les étapes 108, 116 d'insertion de l'empreinte calculée sont remplacées par des étapes 108', 116' de remplacement de la donnée 8 dans le bloc de données modifié 6' par l'empreinte calculée 2, 2'. Ainsi le bloc de données modifié 6' diffère du bloc de données 6 en ce qu'il comprend la donnée 8 à l'emplacement de l'empreinte 2. Les étapes 101, 105' et 111' génèrent le bloc de données 6' contenant la donnée 8 à l'emplacement d'insertion d'empreinte. A noter que la suppression de l'empreinte, telle que réalisée aux étapes 101 et 105 peut être réalisée par remplacement de la donnée supprimée par une autre donnée. A noter également que la donnée 8 n'est pas nécessairement insérée dans le bloc de données à la place de l'empreinte, mais peut être insérée en un autre emplacement du bloc de données.

Il peut également être envisagé d'insérer la même empreinte d'identification d'un bloc de données plusieurs fois dans ce dernier. Dans ce cas, le repère 7 peut être utilisé pour trouver une des empreintes d'identification du bloc de données, et l'empreinte trouvée peut être ensuite utilisée pour rechercher les autres empreintes d'identification du bloc de données. Les étapes de suppression 101, 105 ou de remplacement 101', 105' sont alors effectuées pour toutes les empreintes d'identification insérées dans le bloc de données.

L'empreinte selon son type peut constituer à elle seule le repère 7 permettant de la localiser dans le bloc de données 4. C'est par exemple le cas lorsque la métadonnée est d'un format suffisamment spécifique pour pouvoir être localisée dans le bloc de données au moyen d'une expression régulière. Par exemple, lorsque la métadonnée est une empreinte "shal" prenant un format hexadécimal de 40 caractères (par exemple "313579888a840dec517a3908d57427299eclf5f7"), elle est localisable dans le bloc de données au moyen de l'expression régulière "[0-9a-f]{40}".

L'empreinte 2 peut être insérée dans le bloc de données 4 sous la forme ou dans une métadonnée utilisée pour identifier le bloc de données. Lorsque l'empreinte 2 ou la métadonnée qui la contient ne permet pas à elle seule de localiser l'empreinte, ce qui est notamment le cas lorsque l'empreinte ou la métadonnée peut être confondue avec le contenu normal du bloc de données, le repère 7 peut être inséré dans le bloc de données 4 ou la métadonnée. Ainsi le repère 7 peut être une mise en forme spécifique, une chaîne de caractères spécifique connue pour figurer dans la métadonnée d'identification d'un bloc de données, des séparateurs réguliers, etc. La mise en forme peut être connue de façon implicite puisque définie par défaut, par exemple, une métadonnée constituée des 20 premiers caractères d'une empreinte "shal", avec un tiret séparateur tous les 5 caractères. Le repère 7 n'est pas nécessairement à l'emplacement de l'empreinte, mais peut indiquer cet emplacement, par exemple par rapport au début ou à la fin du bloc de données, ou par rapport à la position du repère dans le bloc de données. Ainsi le repère 7 peut être associé à une information utile à la localisation de l'empreinte, telle qu'une position définie par rapport au repère 7, ou bien par rapport au début ou à la fin du bloc de données.

Plus particulièrement, un élément de langage choisi ou normé peut être inséré dans le bloc de données 4 pour désigner au sein même du bloc de données des zones appelées sections protégées, destinées à accueillir l'empreinte 2 ou une métadonnée contenant l'empreinte. Par exemple, il est possible d'utiliser un langage de balises ouvrantes et fermantes : le début de la section protégée est identifié par un signe spécifique tel que "<<<" et la fin par un autre signe spécifique tel que ">>>".

Ainsi, le langage permettant d'identifier l'emplacement d'une section protégée peut être un langage de marques et de balises, telles que "<<< ... >>>", reconnu et exploité par exemple au moyen d'outils habituels en informatique, notamment les expressions régulières (regexp), les programmes unix grep et sed, etc. Ce langage de balises peut être un dialecte de XML tel qu'un langage de balises normalisé : par exemple "<section-protégée>...</section-protégée>".

La position d'une section protégée peut être également déterminée, par exemple, en fonction du type de bloc de données (document) considéré, au début ou à la fin du bloc de données. Dans ce cas, l'empreinte 2 n'est insérée ni en tout début de bloc de données, ni après la fin du bloc, mais après une balise ouvrante ou avant une balise fermante. Le procédé 1, 1' peut comprendre des étapes d'initialisation incluant le marquage du bloc de données par insertion de balises en un ou plusieurs emplacements librement choisis.

Il est à noter que les données indiquant l'emplacement et/ou la longueur et/ou les paramètres de présentation d'une section protégée peuvent figurer dans le bloc de données 4 en dehors de la section protégée. Il est à noter encore que pour certains types de documents binaires, l'insertion d'une section protégée dans le bloc de données 4 peut être faite de manière à ce que la longueur de la zone de texte qui la contient demeure inchangée après insertion et remplacement de l'empreinte 2. En outre, les étapes de suppression 101, 105 ou remplacement 101', 105' peuvent consister aussi bien à remplacer toute la zone protégée, y compris les balises, ou seulement le contenu entre les balises.

En outre, l'empreinte 2 selon son type peut renseigner à elle seule sur le calcul ou algorithme de calcul ou encodage ayant permis sa génération. L'empreinte peut également être associée au nom de l'algorithme de calcul ayant servi à la génération de l'empreinte, tel que "md5", ou "shal", ou le nom de l'encodage, tel que "hex" (pour hexadécimal), "b64" (pour base 64), ou "bubble-babble". En outre, l'algorithme ou l'encodage peut être connu de façon implicite puisque défini par défaut.

Lorsque l'empreinte 2 n'indique pas en elle-même le type de calcul ou algorithme de calcul ayant permis sa génération, cette information peut être fournie dans une métadonnée insérée dans le bloc de données 4. Si l'empreinte 2 est insérée dans une métadonnée, cette information de type de calcul d'empreinte peut être insérée dans la même métadonnée que l'empreinte 2. La métadonnée contenant l'information de type de calcul d'empreinte peut également être insérée dans une section protégée telle que décrite précédemment.

Dans un premier mode de réalisation du procédé 1, 1', l'empreinte est produite par une fonction irréversible telle qu'une fonction de hachage.

Dans un deuxième mode de réalisation du procédé 1, 1', l'empreinte 2 est insérée dans le bloc de données 4 sous la forme d'une signature numérique générée en chiffrant l'empreinte du bloc de données à l'aide d'une clé privée d'une paire de clés publique/privée. La vérification 102 de la signature numérique peut consister à déchiffrer la signature avec la clé publique de la paire de clés publique/privée, pour obtenir une empreinte déchiffrée du bloc de données, et à vérifier que l'empreinte déchiffrée correspond à celle calculée à partir du bloc de données modifié 6 dans lequel l'empreinte 2 a été supprimée à l'étape de suppression 101 ou de remplacement 101'. A noter que l'empreinte 2 peut également être une signature calculée en chiffrant non pas une empreinte du bloc de données, mais directement le bloc de données, avec la clé privée. Dans ce cas, la vérification de la signature peut être effectuée en déchiffrant la signature à l'aide de la clé publique correspondante et en comparant le bloc de données déchiffré ainsi obtenu avec le bloc de données modifié.

Dans l'un ou l'autre de ces deux modes de réalisation, une ou plusieurs métadonnées 2 figurant dans le bloc de données 4 peuvent fournir les paramètres nécessaires à la vérification. Ces paramètres peuvent indiquer le type d'algorithme utilisé pour générer l'empreinte et/ou la signature. Dans le second mode de réalisation, ces paramètres peuvent fournir l'adresse de courrier électronique d'un signataire "gpg", et la clé publique correspondante. Selon un mode de réalisation, l'une de ces métadonnées peut contenir une information non supprimée lors des étapes de suppression 101, 105 ou de remplacement 101', 105'. Par exemple, il peut être spécifié que l'adresse de courrier électronique d'un signataire d'un bloc de données ne soit pas supprimée, ce qui permet d'empêcher que le bloc de données soit signé par une autre personne si le bloc de données est référencé par sa signature par d'autres blocs de données, sans modification de ces autres blocs de données.

Selon un mode de réalisation, une métadonnée de référence insérée dans le bloc de données, contient l'empreinte ou la signature d'un autre bloc de données, afin d'établir un lien de référence avec cet autre bloc de données. Si la métadonnée de référence est insérée dans le bloc de données avant le calcul et l'insertion de l'empreinte dans le bloc de données effectuées aux étapes 108, 108', 116, 116', le lien de référence ainsi établi ne peut pas être modifié, sans corrompre le bloc de données contenant la métadonnée de référence. Ce lien de référence peut être utilisé par exemple pour établir des liens fiables entre un bloc de données et des versions antérieures de ce bloc de données.

Selon un mode de réalisation, certaines métadonnées sont éligibles à la suppression (ou au remplacement) effectuée aux étapes 101, 101', 105, 105', et d'autres sont non éligibles à la suppression. Ainsi, la métadonnée d'identification contenant l'empreinte du bloc est éligible à la suppression. Les métadonnées de référence ne devant pas être modifiées ou dont l'authenticité doit être assurée ne sont pas éligibles à la suppression. Ainsi elles sont prises en compte dans le calcul d'empreinte effectué aux étapes 102 et 114. Par ailleurs, en prévoyant des métadonnées de référence éligibles à la suppression, il est possible dans un bloc de données de référencer des versions futures du bloc de données ou des blocs de données contenant des informations complémentaires, sans avoir à mettre à jour l'empreinte d'identification du bloc de données.

D'une manière générale, de telles métadonnées de référence éligibles ou non à la suppression permettent de gérer des filiations ou référencements entre blocs de données. En particulier, ce moyen permet de définir des relations entre versions d'un même bloc de données ou entre différents blocs de données, ces relations pouvant être exploitées par un programme.

On comprend également que certaines métadonnées peuvent ne pas justifier une vérification en raison de leur nature purement informative (une date, des références à des documents extérieurs hors contrôle tels que des sources de documentation externe). Ces métadonnées peuvent alors être configurées pour être éligibles à la suppression. Par exemple, on peut vouloir insérer dans un bloc de données une référence à une documentation particulièrement utile, une date de lecture, un nom de lecteur, etc., sans avoir à mettre à jour l'empreinte du bloc de données 4. Il est ainsi possible d'insérer dans un bloc de données des informations arbitraires (c'est-à-dire non calculées à partir du contenu) sans modifier la valeur de l'empreinte d'identification du bloc de données 4, dépendant du contenu de ce dernier.

Plus particulièrement, la technologie actuelle ne permet pas de gérer des filiations de blocs de données, notamment en faisant en sorte qu'un bloc de données ou fichier numérique référence ses versions antérieures de manière indiscutable, ni qu'il référence ses versions futures ou des documentations complémentaires sans que son empreinte s'en trouve modifiée. Le procédé 1, 1' permet de référencer les versions antérieures d'un fichier numérique en incorporant des métadonnées de référence contenant ou permettant chacune de déterminer l'empreinte d'identification d'un autre fichier. Si une métadonnée de référence est éligible à la suppression, il est possible de la modifier sans avoir à mettre à jour l'empreinte du bloc de donnée contenant cette métadonnée de référence.

Ainsi, selon un mode de réalisation, le procédé 1, 1' comprend une étape supplémentaire exécutée entre l'étape 105, 105' et l'étape 106, ou bien à la suite de l'étape 108, 108', pour insérer dans le bloc de données 2 en tant que référence l'empreinte qui a été supprimée à l'étape 105, 105'. Si l'empreinte de référence est ainsi insérée avant l'étape 106 de calcul de la nouvelle empreinte d'identification, l'empreinte de référence n'est pas elligible à la suppression et donc référence de manière indiscutable la version antérieure du bloc de données (identifiée par l'empreinte supprimée à l'étape 105, 105'. Si au contraire, l'empreinte de référence est insérée dans le bloc de données après l'étape de calcul 106, elle est éligible à la suppression pour pouvoir vérifier l'intégrité du bloc de données (étapes 100-103). Il en résulte que cette empreinte de référence peut être modifiée sans introduire une incohérence entre l'empreinte du bloc de données et l'empreinte d'identification du bloc de données insérée à l'étape 108, 108'.

De même, la technologie actuelle ne permet pas de distinguer un bloc de données qui possède une empreinte d'identification donnée et ceux qui y font référence. Selon un mode de réalisation, le procédé 1, 1' met en œuvre plusieurs encodages distincts d'une même empreinte pour distinguer dans un même bloc de données une empreinte d'identification du bloc de données d'une empreinte de référence à un autre bloc de données. De cette manière, une empreinte de bloc de données peut être utilisée comme mot clé pour soit rechercher un bloc de données identifié par l'empreinte, soit rechercher des blocs de données faisant référence au bloc de données identifié par l'empreinte. Ainsi, un bloc de données trouvé à partir de son empreinte ou d'une empreinte de référence à un autre bloc de données, est identifié de manière certaine dans les résultats d'une recherche.

Selon l'exemple présenté ci-dessus, dans lequel la métadonnée d'identification 2 d'un bloc de données 4 inclut une empreinte "shal" ayant un format hexadécimal de 40 caractères, les blocs de données faisant référence à ce bloc de données identifié par cette empreinte intègrent une métadonnée incluant par exemple la variation suivante de l'empreinte :
"3_13579888a840dec517a3908d57427299ec1f5f7", où l'insertion du caractère "_" en position 1 indique qu'il s'agit d'une empreinte de référence à un autre bloc de données et non une empreinte d'identification du bloc de données. Ainsi les occurrences de ce type de variation ne seront pas repérées par l'expression régulière de recherche de l'empreinte d'identification (non modifiée) et donc ne peuvent pas entrer en conflit avec les empreintes d'identification qui ne sont pas dans des métadonnées de référence.

L'empreinte 2 peut en outre dépendre d'informations contextuelles et/ou extérieures au bloc de données 4, de sorte qu'il n'est pas possible de modifier ces informations contextuelles ou extérieures sans changer l'empreinte du bloc de données. Par exemple, le calcul de l'empreinte 2 peut tenir compte d'un nom de fichier comportant le bloc de données ou d'une partie de ce nom de fichier, de sorte qu'il n'est pas possible de le modifier.

Par ailleurs, les moteurs d'indexation et de recherche n'ont actuellement pas la possibilité d'identifier des blocs de données par leur contenu de manière certaine et non ambiguë, notamment en se passant de dictionnaires ou autres services spécifiques d'archivage. En effet, via les moteurs de recherche et d'indexation actuels, il n'est pas possible de trouver une information précise de manière rapide et non ambiguë, car il n'est pas prévu de retrouver un bloc de données directement à partir de son empreinte. Le caractère naturellement ambigu de mots clés issus d'un langage naturel ou technique tels qu'utilisés actuellement, et leur utilisation dans un bruit de fond croissant, font que les recherches directes de documents précis sont complexes, et souvent mises à mal par les critères de priorité des moteurs de recherche. Certes, il est actuellement possible d'insérer une empreinte dans le nom d'un fichier pour l'indexer, et de retrouver ce fichier lors d'une recherche. Toutefois, cette manière de procéder souffre de plusieurs inconvénients, en particulier, l'impossibilité d'interdire tout changement de ce nom par un tiers et/ou la difficulté de gestion des documents dont le nom contiendrait leur propre empreinte.

Relativement à ces problèmes, le procédé 1,1' prévoit avantageusement que tout ou partie d'une empreinte 2 soit utilisée comme mot clé d'un moteur de recherche de façon à permettre de rechercher un bloc de données 4 à partir de l'empreinte 2 qu'il contient. Cette empreinte peut se présenter par exemple sous la forme d'une chaîne de caractères non naturelle de grande longueur, qu'il est très difficile de falsifier (une telle tentative de falsification s'appelle une attaque de "préimage"). Par ailleurs, cette chaîne de caractères ne peut pas être produite par hasard ou alors selon des probabilités infinitésimales. Une telle recherche ne peut donc retourner que les seules copies identiques d'un bloc de données donné.

Selon un mode de réalisation, le procédé 1, 1' (étapes 110 à 116 ou à 116') sont exécutées plusieurs fois pour insérer dans un bloc de données 4 non pas seulement une, mais autant d'empreintes ou signatures que désiré. L'ajout d'une nouvelle empreinte peut sous certaines conditions, ne pas changer les valeurs des empreintes 2 antérieurement intégrées au bloc de données. Tel est le cas par exemple en insérant la nouvelle empreinte dans une nouvelle section protégée juxtaposée à une section protégée antérieurement insérée dans le bloc de données, et si toutes les sections protégées contenant une empreinte font l'objet de la suppression 101, 101' 105, 105' lors de la vérification et de l'insertion d'une empreinte, chaque empreinte pouvant correspondre à l'empreinte du bloc de données initial, c'est-à-dire exempt de ces ajouts de sections protégées. Les empreintes ainsi insérées dans le bloc de données peuvent avoir été calculées par différents types de calcul.

Selon un autre mode de réalisation, les étapes (a) (110, 114, 116 ou 110, 112, 114, 116') sont exécutées plusieurs fois en cascade sur un bloc de données. Ainsi, chaque exécution des étapes (a) introduit dans le bloc de données une nouvelle empreinte d'identification du bloc de données, calculée sur le bloc de donnée dans l'état où il se trouve au début de chaque nouvelle exécution des étapes (a).

En permettant ainsi d'insérer dans un bloc de données, en cascade plusieurs empreintes d'identification, le procédé 1, 1' permet donc, en plus de la possibilité d'utiliser des algorithmes de calcul déjà connus comme résistants, de se protéger des attaques de "préimage" de façon très robuste en combinant plusieurs empreintes ou signatures dans un même bloc de données 4. En effet, une attaque de "préimage" devrait pour aboutir, non seulement produire un bloc de données qui possède exactement et toutes les mêmes empreintes, et qui de surcroit puisse passer valablement pour le bloc de données d'origine (une archive zip, un source java exécutable, etc...). Cette attaque est déjà très difficile à réaliser quand il n'y a qu'une empreinte à contrefaire, et devient totalement impossible avec les technologies connues dès lors que l'on combine plusieurs empreintes.

Le choix des formats (nombre de caractères par exemple) et encodages (hexadécimal, b64, bubble babble par exemple) des empreintes permet notamment de définir de quelle manière l'indexation du document pourra être réalisée au moyen des empreintes ou des signatures. Par exemple, dans le format "bubble babble", une empreinte se présente sous forme de mots indépendants de 5 lettres, qui sont compréhensibles et mémorisables par un être humain. Dans le format hexadécimal, les empreintes sont plus longues, en n'utilisant que tous les chiffres, et les lettres de A à F. Le format "b64" utilise tous les caractères, majuscules et minuscules.

Selon un mode de réalisation, les métadonnées comprennent une partie invariable et une partie variable, et seule la partie variable d'une métadonnée éligible à la suppression peut être supprimée lors des étapes de suppression 101, 101', 105, 105'. En indiquant le mode de calcul de l'empreinte 2 dans la partie invariable de la métadonnée d'identification, il est possible d'imposer le mode de calcul de l'empreinte, et donc d'interdire la création d'autres blocs de données identiques à l'issue de l'étape de suppression 101, 101', 105, 105', et ayant des empreintes différentes.

La technologie actuelle ne permet pas à un programme d'exploiter via son propre code ses diverses clés de certification ou celles de programmes associés. En effet, ces informations sont fournies le cas échéant dans des fichiers séparés de fichiers source du programme, et sont donc susceptibles d'être corrompues par un tiers, et accessibles au moyen d'artifices. Ainsi, un mode de réalisation concerne un produit programme d'ordinateur comprenant des portions de fichier de programme enregistrées sur un support lisible par un ordinateur, pour mettre en œuvre les étapes du procédé 1, 1', le produit programme d'ordinateur constituant tout ou partie du bloc de données 4 ou étant réparti dans plusieurs blocs de données. En permettant le placement d'empreintes de blocs de données sous le contrôle du programmeur, il est possible par exemple d'initialiser une variable de type chaine de caractères du programme à la valeur de l'empreinte d'un bloc de données appartenant à un fichier contenant tout ou partie du programme. Ainsi, le procédé 1, 1' peut offrir à un programme un accès immédiat à son empreinte d'identification.

Le produit programme d'ordinateur ainsi modifié se trouve lui-même signé et authentifié et surtout capable de s'auto-vérifier. Le procédé 1, 1' permet ainsi de certifier que des blocs de données ne sont pas corrompus, de recherche et d'indexation de ces blocs de données sur la base de leurs empreintes (par exemple "shal") par les moteurs de recherche usuels, et de liaison des blocs de données entre eux par des références aux empreintes, tout en permettant de distinguer, par les moteurs de recherche, entre les copies d'un bloc de données qui sont identifiés par leur empreinte , et ceux qui y font référence.

Concernant les déploiements possibles du procédé 1,1' :
- il peut être mis à disposition des utilisateurs finaux pour chaque plateforme matérielle, de manière à être utilisé par exemple très simplement par une opération de glisser/déposer,
- il peut être intégré ou appelé par des logiciels existants (navigateurs internet, compilateurs) de manière à automatiser la validation et la recherche de documents,
- il peut être mis à disposition des utilisateurs via un site web ou un service web.

Un mode de réalisation concerne un programme informatique conçu pour traiter des blocs de données contenant de multiples occurrences d'empreintes et/ou signatures calculées par des algorithmes variés et présentées selon des encodages variés comme par exemple dans l'ordre : i) une empreinte "md5" à 32 caractères hexadécimaux, ii) une empreinte "shal" à 40 caractères hexadécimaux, iii) la même empreinte en "bubble babble", iv) une signature "gpg", soit :
i) 11a3e229084349bc25d97e29393ced1d,
ii) 313579888a840dec517a3908d57427299ec1f5f7,
iii) xesef-havem-midim-gafuv-sugul-piveb-mahul-ginad-nilys-catuz-loxix, et
iv) 88460400110200060502503e355e000a0910205d6dcf987el8306913009f6524a79 b328f506a8bb6228a09a1a3c3b19713f6009f6a17805128a2919a65459047f32357493 eb0a913.

Le programme localise ces empreintes par exemple au moyen d'expressions régulières comme "[0-9a-f]{40}", et réalise les mêmes traitements que précédemment, à savoir suppression des empreintes d'identification et métadonnées éligibles à la suppression 101, 101' ou 105, 105', calcul d'empreinte 102, 106, 114, vérification d'empreinte 103 ou insertion d'empreinte 108, 108', 116, 116'. D'autres modalités pour distinguer un bloc de données possédant une empreinte de ceux qui lui font référence peuvent être imaginées. On peut en effet calculer à partir de l'encodage hexadécimal la version "bubble babble" de la même empreinte. On peut ainsi faire référence au bloc de données en utilisant l'empreinte "shal", et faire les recherches du bloc de données en utilisant l'empreinte en "bubble babble". L'insertion dans le bloc de données d'une signature permet d'identifier l'auteur de la signature et la date de signature. La robustesse de la protection offerte par les empreintes contre les attaques de "préimage" peut être démultipliée par l'insertion en cascade dans le bloc de données de plusieurs empreintes calculées par des algorithmes distincts.

Il peut être également envisagé toute autre réalisation qui s'appuie sur un langage définissant les métadonnées ou sections protégées et qui caractérise leur contenu. Par exemple et sans limitation, un autre ensemble de métadonnées peut être envisagé :
i) #11a3e229084349bc25d97e29393cedld#,
ii) <zp shal hex 40 11a3e229084349bc25d97e29393ced1d/zp>, soit une empreinte "shal" de 40 caractères hexadécimaux,
iii) {MTV5iIqEDex shal hex 8 11a3e229}, soit une empreinte "shal" tronquée à 8 caractères hexadécimaux,
iv) [zp signer abc.defgh@gmail.com], soit le signataire du bloc de données,
v) &zp 200 end&, soit la définition d'une zone protégée dans les 200 derniers caractères du bloc de données dont peuvent être extraites les informations décrivant le contenu et l'emplacement de la zone protégée, et
vi) <zp freemeta next version is dcf987e18306913009f6524a79b3/zp>, soit une zone protégée (éligible à la suppression (101, 101', 105, 105') contenant du texte librement édité par un utilisateur, par exemple pour faire référence à un document produit dans le futur, sans changer la valeur des empreintes.

Selon un mode de réalisation, des blocs de données de liaison, spécifiques sont générés exclusivement pour établir un lien entre deux autres blocs de données, sans avoir à modifier l'un ou l'autre de ces deux blocs de données pour y insérer à titre de référence l'empreinte de l'autre de ces deux blocs de données. Chaque bloc de données de liaison contient, en plus de sa propre empreinte d'identification, les empreintes d'identification de plusieurs autres blocs de données en tant qu'empreintes de référence. Les blocs de données de liaison permettent d'établir des liens entre blocs de données sans avoir à modifier ces derniers, donc sans modification de leurs empreintes d'identification. Les empreintes de référence et les blocs de données de liaison constituent des éléments de structuration permettant structurer un ensemble de blocs de données, dans lequel chaque bloc de données est lié directement ou indirectement avec plusieurs autres blocs de données. Ainsi, si l'un des blocs de données est modifié et que les liens de référence font partie des données non éligibles à la suppression, il perd tous ses liens directs et indirects (par l'intermédiaire d'un bloc de liaison) avec les autres blocs de données.

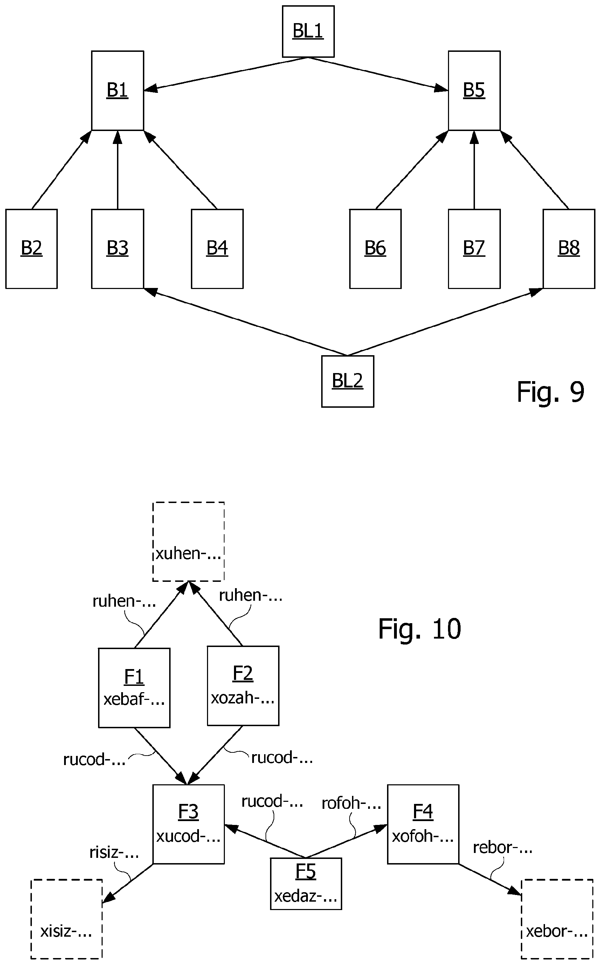

La figure 9 représente un exemple d'ensemble de blocs de données B1 à B8 liés chacun à un ou plusieurs autres blocs de données, et dans lequel des flèches symbolisent chacune un lien de référence dans un bloc de données (bloc origine de la flèche) avec un autre bloc (bloc destination de la flèche). Dans l'exemple de la figure 9, les blocs B2, B3 et B4 contiennent l'empreinte du bloc B1 en tant que référence et les blocs B6, B7 et B8 contiennent l'empreinte du bloc B5 en tant que référence. En outre l'ensemble de blocs de données comprend des blocs de données de liaison BL1, BL2 établissant respectivement un lien entre les blocs de données B1 et B5 et un lien entre les blocs de données B3 et B8.

La figure 10 représente un ensemble de fichiers F1 à F5 liés entre eux par des liens de référence. L'annexe I fournit le contenu des métadonnées de chacun des fichiers F1 à F5. Dans chacun des fichiers F1 à F5, les métadonnées sont insérées dans une section protégée délimitée par les balises ouvrantes "/*" et fermantes "*/". Chaque métadonnée est repérée et délimitée entre les mots clés "keeex" et "xeeek". Les empreintes sont codées dans le format "bubble babble". Les empreintes d'identification commencent et se terminent par la lettre "x" et sont introduites par le mot clé "self'. Les empreintes de référence commencent et se terminent par la lettre "r" et sont introduites par le mot clé "ref'. Ainsi, une empreinte d'identification peut être déduite d'une empreinte de référence simplement en changeant les premières et dernière lettres "r" de l'empreinte par la lettre "x" et réciproquement. Les liens de référence associant deux empreintes de référence (fichier F5) sont introduites par le mot clé "ref2". Les fichiers F1 et F2 font référence au fichier F3 et à un autre fichier identifié par l'empreinte :
"xuhen-zakid-kakas-mased-hedot-faded-tamap-rulem-porib-cihit-vicif-fazuh-kisit-tycat-gypaf-dymag-raxux". Le fichier F3 fait référence à un autre fichier identifié par l'empreinte :
"xisiz-kynov-mogec-tycas-livaf-hytov-cyzar-hofed-nobyl-zuvyz-mifav-kiteb-nodun-mipyr-bilac-ceheh-zyxyx" Le fichier F4 fait référence à un autre fichier identifié par l'empreinte :
"xebor-movab-vyzif-tisaz-hurev-vuzys-vohyk-kyfaz-pehih-dygik-zukuv-zulek-fobyk-vedug-banal-sylin-muxax" Le fichier F5 est un bloc de liaison établissant un lien de référence entre les fichiers F3 et F4. Lors de l'étape de suppression 101, 101' durant une vérification d'un des fichiers F1 à F5, seule l'empreinte d'identification repérée par le mot clé "self' est supprimée du fichier. Les fichiers F1 à F5 comprennent une autre métadonnée "name" permettant d'attribuer un nom au fichier et de le spécifier dans le corps du fichier. Le fichier F3 comprend une métadonnée "prop" permettant de définir une propriété du fichier, de type "description" dans l'exemple fourni.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes.

Pour les opérations de vérification et de mise à jour d'un bloc de données, il est évident qu'il n'est pas nécessaire de générer un bloc de données modifié dans lequel l'empreinte d'identification a été supprimée. En effet, le calcul d'empreinte peut être effectué sur le bloc de données en excluant à la volée les bits de l'empreinte d'identification figurant dans le bloc de données.

Par ailleurs, d'autres modes de calcul d'empreinte que ceux décrits peuvent être envisagés. Par exemple les calculs d'empreinte peuvent être réalisés par une fonction de compression de données sans perte d'information, de sorte que le calcul d'empreinte est une opération réversible. Les calculs d'empreinte peuvent être également réalisés par une fonction de compression de données avec perte, mais rendant possible la reconstitution d'un bloc de données à partir de son empreinte. La fonction de calcul peut par exemple combiner une fonction de transformation en image bitmap, et une fonction de compression d'image bitmap avec perte. Un bloc de données peut être reconstitué à partir de son empreinte en décompressant l'image, et en convertissant l'image en caractères alphanumériques par une fonction de reconnaissance de caractères.

### ANNEXE I (faisant partie intégrante de la description)

Fichier F1 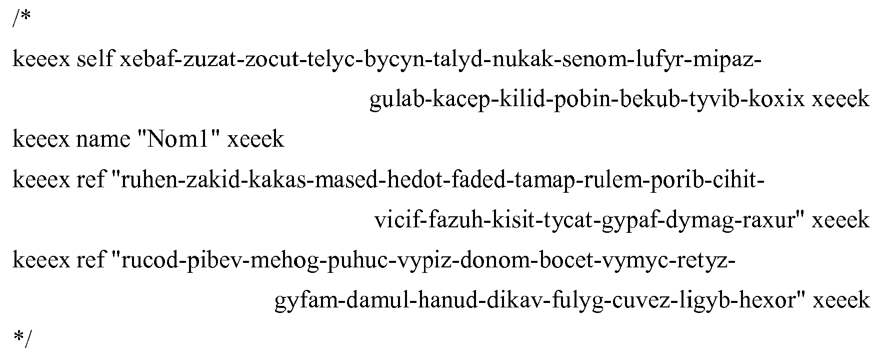
Fichier F2 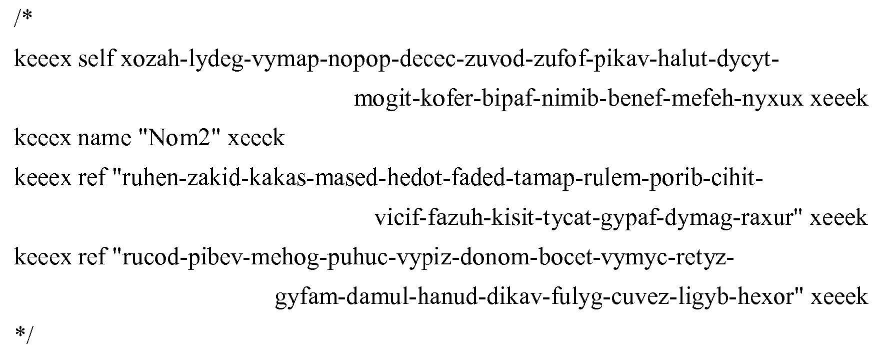
Fichier F3 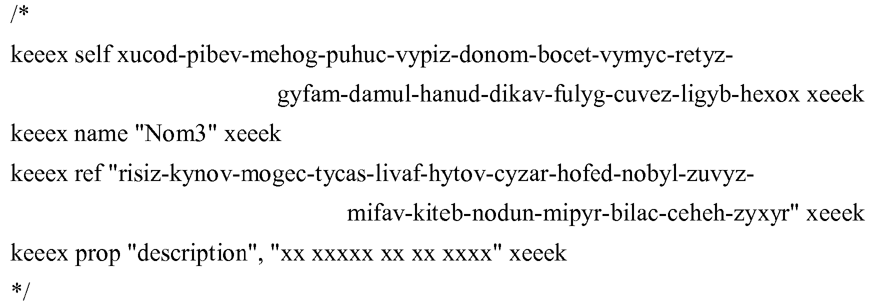
Fichier F4 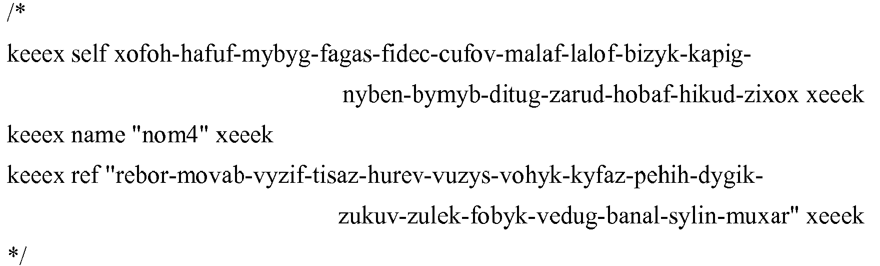
Fichier F5

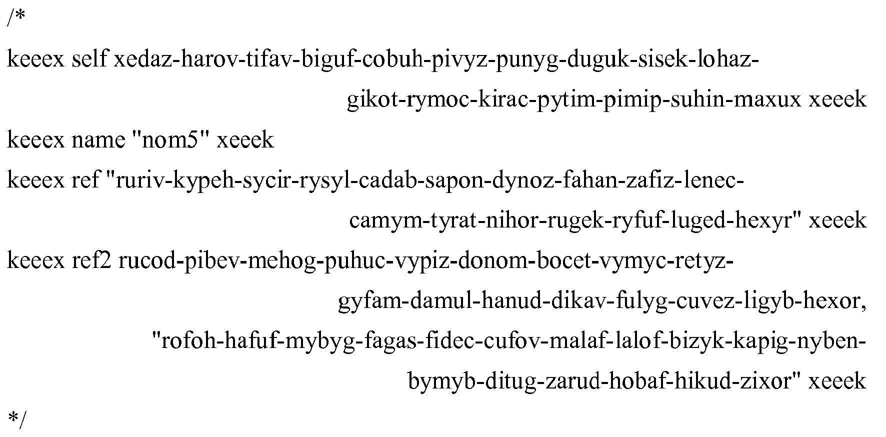

## Revendications

1. Procédé de vérification de l'intégrité d'un bloc de données numériques, le procédé comprenant des étapes consistant à :
rechercher, dans un premier bloc de données (4), une empreinte numérique d'identification du premier bloc de données (4), au moyen d'un premier repère (7),
si l'empreinte (2) d'identification du premier bloc de données est trouvée dans le premier bloc de données, calculer une empreinte numérique du premier bloc de données en appliquant une fonction de calcul d'empreinte au premier bloc de données, l'empreinte calculée du premier bloc de données ayant une valeur dépendant de chacun des bits du premier bloc de données en excluant les bits de l'empreinte d'identification (2) trouvée dans le premier bloc de données, et
vérifier l'empreinte d'identification trouvée dans le premier bloc de données en la comparant à l'empreinte calculée du premier bloc de données, une comparaison fausse révélant que le premier bloc de données a été modifié depuis que l'empreinte d'identification a été insérée dans le premier bloc de données, ou que l'empreinte d'identification a été calculée en appliquant au premier bloc de données une autre fonction de calcul d'empreinte.

2. Procédé selon la revendication 1, dans lequel le premier bloc de données comprend un lien de référence formé à partir d'une autre empreinte d'identification présente dans un second bloc de données, et ayant une valeur dépendant de chacun des bits du second bloc de données en excluant les bits de l'autre empreinte d'identification.

3. Procédé selon l'une des revendications 1 et 2, comprenant des étapes consistant à :
rechercher, dans un troisième bloc de données, une empreinte numérique (2) d'identification du troisième bloc de données (4), au moyen d'un second repère (7),
si l'empreinte d'identification du troisième bloc de donnée est trouvée dans le troisième bloc de données, calculer une empreinte numérique (2) du troisième bloc de données en appliquant la fonction calcul d'empreinte au troisième bloc de données, l'empreinte calculée du troisième bloc de données ayant une valeur dépendant de chacun des bits du troisième bloc de données en excluant les bits de l'empreinte d'identification trouvée dans le troisième bloc de données, et
introduire l'empreinte calculée du troisième bloc de données dans le troisième bloc de données en un emplacement déterminé par le second repère dans le troisième bloc de données.

4. Procédé selon l'une des revendications 1 à 3, comprenant des étapes de génération d'un bloc de données vérifiable, consistant à :
rechercher un emplacement d'insertion d'empreinte dans un bloc de données initial (3), au moyen d'un troisième repère,
calculer une troisième empreinte numérique (2) du bloc de données vérifiable en appliquant la fonction calcul d'empreinte au bloc de données initial, la troisième empreinte calculée du bloc de données vérifiable ayant une valeur dépendant de chacun des bits du bloc de données initial, et
générer le bloc de données vérifiable en introduisant la troisième empreinte calculée du bloc de données vérifiable en tant qu'empreinte d'identification du bloc de données vérifiable, à l'emplacement d'insertion trouvé dans le bloc de données initial.

5. Procédé selon l'une des revendications 1 à 4, dans lequel le calcul de chaque empreinte (2) comprend une étape d'insertion d'une donnée prédéfinie (8) dans le bloc de données avant d'appliquer la fonction de calcul d'empreinte au bloc de données.

6. Procédé selon l'une des revendications 1 à 5, dans lequel un bloc de données comprend une empreinte d'identification introduite en plusieurs emplacements dans le bloc de données, l'empreinte d'identification du bloc de données étant calculée en excluant les bits de l'empreinte d'identification dans tous les emplacements de l'empreinte d'identification dans le bloc de données.

7. Procédé selon l'une des revendications 3 à 5, comprenant plusieurs étapes de calcul d'une empreinte d'un bloc de donnée et d'introduction de l'empreinte calculée dans le bloc de données en conservant les empreintes déjà insérées dans le bloc de données.

8. Procédé selon l'une des revendications 1 à 7, comprenant une étape de lecture d'une information utile à la localisation et/ou au calcul d'une empreinte d'identification (2), figurant dans un bloc de données (4) contenant l'empreinte d'identification.

9. Procédé selon l'une des revendications 2 à 8, dans lequel le lien de référence formé à partir de l'empreinte d'identification présente dans le second bloc de données permet de construire au moins en partie l'empreinte d'identification présente dans le second bloc de données.

10. Procédé selon l'une des revendications 1 à 9, dans lequel l'un des blocs de données comprend une métadonnée comprenant une partie variable exclue du calcul d'empreinte appliqué au bloc de données pour calculer l'empreinte d'identification du bloc de données.

11. Procédé selon la revendication 10, dans lequel l'empreinte d'identification du bloc de donnée se trouve dans la partie variable d'une métadonnée d'identification.

12. Procédé selon l'une des revendications 1 à 11, dans lequel au moins une partie de l'empreinte d'identification introduite dans chaque bloc de données est utilisée par un moteur d'indexation ou comme mot clé de recherche par un moteur de recherche.

13. Procédé selon l'une des revendications 1 à 12, dans lequel l'un des blocs de données (4) est au moins une partie d'un fichier de code exécutable d'un programme, et l'empreinte d'identification (2) du bloc de données, calculée sur le bloc de données est introduite dans le bloc de données en un emplacement permettant au programme d'exploiter l'empreinte d'identification du bloc de données.

14. Procédé selon l'une des revendications 1 à 13, dans lequel l'introduction de chaque empreinte d'identification (2) dans un bloc de données (4) est effectuée en un emplacement dans le bloc de données, choisi pour ne pas modifier les conditions d'utilisation attendues du bloc de données (4) par un programme logiciel.

15. Procédé selon l'une des revendications 1 à 14, dans lequel l'empreinte d'identification (2) insérée dans un bloc de données est une signature numérique générée par un calcul cryptographique asymétrique utilisant une clé privée d'une paire de clés publique/privée, et la vérification d'empreinte (102) comprend une étape de déchiffrement de la signature numérique trouvée dans le bloc de données, avec la clé publique de la paire de clés publique/privée, la clé publique pouvant se trouver dans une métadonnée du bloc de données.

16. Produit programme d'ordinateur comprenant des portions de fichier de programme enregistrées sur un support lisible par un ordinateur, pour mettre en œuvre les étapes du procédé selon l'une des revendications 1 à 15.

17. Produit programme d'ordinateur selon la revendication 16, dans lequel au moins une partie du programme est inclus dans l'un des blocs de données (4).

18. Ensemble de fichiers enregistrés chacun sur un support lisible par un ordinateur, dans lequel chaque fichier contient une empreinte numérique d'identification du fichier, l'empreinte d'identification du fichier étant localisable dans le fichier au moyen d'un repère, l'empreinte d'identification du fichier ayant une valeur calculée en appliquant une fonction de calcul d'empreinte au fichier, la valeur de l'empreinte d'identification dépendant de chacun des bits du fichier en excluant les bits de l'empreinte d'identification du fichier, présente dans le fichier, l'intégrité de chaque fichier de l'ensemble de fichiers étant vérifiable à l'aide du procédé selon l'une des revendications 1 à 15, chaque fichier étant considéré comme un bloc de données.

19. Ensemble selon la revendication 18, dans lequel au moins l'un des fichiers comprend un lien de référence formé à partir d'une empreinte d'identification d'un autre fichier de l'ensemble, le lien de référence figurant dans l'un des fichiers de l'ensemble, étant obtenu en modifiant d'une manière réversible une des empreintes d'identification des fichiers de l'ensemble, pour distinguer le lien de référence des empreintes d'identification.

20. Ensemble selon l'une des revendications 18 et 19, comprenant un fichier de liaison contenant deux liens de référence formés à partir d'empreintes d'identification de deux autres fichiers de l'ensemble, pour établir un lien entre les deux autres fichiers.

## Patentansprüche

1. Verfahren zur Integritätsprüfung eines Blocks numerischer Daten, wobei das Verfahren die folgenden Schritte umfasst:
Suchen, in einem ersten Datenblock (4) nach einem digitalen Fingerprint, der den ersten Datenblock (4) identifiziert, unter Verwendung einer ersten Verweismarkierung (7); wenn der Fingerprint (2), der den ersten Datenblock identifiziert, im ersten Datenblock gefunden ist, Berechnen eines digitalen Fingerprints des ersten Datenblocks durch Anwenden einer Fingerprint-Berechnungsfunktion auf den ersten Datenblock, wobei der berechnete Fingerprint des ersten Datenblocks einen Wert hat, der von jedem der Bits des ersten Datenblocks unter Ausschluss der Bits des identifizierenden Fingerprints (2), der im ersten Datenblock gefunden wurde, abhängig ist; und Prüfen des im ersten Datenblock gefundenen identifizierenden Fingerprints durch Vergleichen mit dem berechneten Fingerprint des ersten Datenblocks, wobei ein "Vergleich falsch" aufzeigt, dass der erste Datenblock seit dem Einfügen des identifizierenden Fingerprints in den ersten Datenblock verändert wurde oder dass der identifizierende Fingerprint durch Anwenden einer anderen Fingerprint-Berechnungsfunktion auf den ersten Datenblock berechnet wurde.

2. Verfahren nach Anspruch 1, wobei der erste Datenblock eine Referenzverknüpfung umfasst, die ausgehend von einem weiteren identifizierenden Fingerprint gebildet ist, der in einem zweiten Datenblock vorliegt und einen Wert aufweist, der von jedem der Bits des zweiten Datenblocks unter Ausschluss der Bits des weiteren identifizierenden Fingerprints abhängt.

3. Verfahren nach einem der Ansprüche 1 und 2, das die folgenden Schritte umfasst:
Suchen, in einem dritten Datenblock, nach einem digitalen Fingerprint (2), der den dritten Datenblock (4) identifiziert, unter Verwendung einer zweiten Verweismarkierung (7); wenn der Fingerprint, der den dritten Datenblock identifiziert, im dritten Datenblock gefunden ist, Berechnen eines digitalen Fingerprints (2) des dritten Datenblocks durch Anwenden der Funktion zur Fingerprint-Berechnung auf den dritten Datenblock, wobei der berechnete Fingerprint des dritten Datenblocks einen Wert hat, der von jedem der Bits des dritten Datenblocks unter Ausschluss der Bits des identifizierenden Fingerprints, der im dritten Datenblock gefunden wurde, abhängig ist; und Einbringen des berechneten Fingerprints des dritten Datenblocks in den dritten Datenblock, an einer Stelle, die durch die zweite Verweismarkierung im dritten Datenblock bestimmt wird.

4. Verfahren nach einem der Ansprüche 1 bis 3, das die folgenden Schritte zur Erzeugung eines nachprüfbaren Datenblocks umfasst:
Suchen, in einem Block Anfangsdaten (3), unter Verwendung einer dritten Verweismarkierung, einen Ort zum Einfügen eines Fingerprints; Berechnen eines dritten digitalen Fingerprints (2) des nachprüfbaren Datenblocks durch Anwenden der Funktion zur Fingerprint-Berechnung auf den Block Anfangsdaten, wobei der dritte berechnete Fingerprint des nachprüfbaren Datenblocks einen Wert hat, der von jedem der Bits des Blocks Anfangsdaten abhängig ist; und Erzeugen des nachprüfbaren Datenblocks durch Einbringen des berechneten dritten Fingerprints des nachprüfbaren Datenblocks als identifizierenden Fingerprint des nachprüfbaren Datenblocks an der im Block Anfangsdaten gefundenen Einfügungsstelle.

5. Verfahren nach einem der Ansprüche 1 bis 4, wobei die Berechnung jedes Fingerprints (2) einen Schritt zum Einfügen von im Voraus festgelegten Daten (8) in den Datenblock vor dem Anwenden der Fingerprint-Berechnungsfunktion auf den Datenblock umfasst.

6. Verfahren nach einem der Ansprüche 1 bis 5, wobei ein Datenblock einen identifizierenden Fingerprint umfasst, der an mehreren Stellen in den Datenblock eingebracht ist, wobei der identifizierende Fingerprint des Datenblocks unter Ausschluss der Bits des identifizierenden Fingerprints an allen Stellen des identifizierenden Fingerprints im Datenblock berechnet wird.

7. Verfahren nach einem der Ansprüche 3 bis 5, das mehrere Schritte zum Berechnen eines Fingerprints eines Datenblocks und zum Einbringen des berechneten Fingerprints in den Datenblock unter Beibehaltung der bereits in den Datenblock eingefügten Fingerprints umfasst.

8. Verfahren nach einem der Ansprüche 1 bis 7, das einen Schritt des Lesens von Informationen umfasst, die zum Lokalisieren und/oder Berechnen eines identifizierenden Fingerprints (2) dienen, der in einem den identifizierenden Fingerprint enthaltenden Datenblock (4) vorkommt.

9. Verfahren nach einem der Ansprüche 2 bis 8, wobei die Referenzverknüpfung, die ausgehend von dem im zweiten Datenblock vorliegenden identifizierenden Fingerprint gebildet ist, ermöglicht, zumindest teilweise, den im zweiten Datenblock vorliegenden Fingerprint zu erschließen.

10. Verfahren nach einem der Ansprüche 1 bis 9, wobei einer der Datenblöcke Metadaten umfasst, die einen variablen Teil umfassen, der von der auf den Datenblock angewendeten Fingerprint-Berechnung, um den identifizierenden Fingerprint des Datenblocks zu berechnen, ausgeschlossen wird.

11. Verfahren nach Anspruch 10, wobei sich der identifizierende Fingerprint des Datenblocks im variablen Teil der identifizierenden Metadaten befindet.

12. Verfahren nach einem der Ansprüche 1 bis 11, wobei mindestens ein Teil des in jeden Datenblock eingebrachten identifizierenden Fingerprints von einer Indizierungsmaschine oder als Suchschlüsselwort von einer Suchmaschine verwendet wird.

13. Verfahren nach einem der Ansprüche 1 bis 12, wobei einer der Datenblöcke (4) mindestens ein Teil einer ausführbaren Codedatei eines Programms ist und der identifizierende Fingerprint (2) des Datenblocks, der über dem Datenblock berechnet ist, in den Datenblock an einer Stelle eingebracht wird, die es dem Programm ermöglicht, den identifizierenden Fingerprint des Datenblocks auszuwerten.

14. Verfahren nach einem der Ansprüche 1 bis 13, wobei das Einbringen jedes identifizierenden Fingerprints (2) in einen Datenblock (4) an einer Stelle im Datenblock erfolgt, die so gewählt ist, dass die von einem Softwareprogramm erwarteten Nutzungsbedingungen des Datenblocks (4) nicht verändert werden.

15. Verfahren nach einem der Ansprüche 1 bis 14, wobei der in einen Datenblock eingefügte identifizierende Fingerprint (2) eine digitale Signatur ist, die durch eine asymmetrische kryptographische Berechnung unter Verwendung eines privaten Schlüssels eines Paares öffentlicher Schlüssel/privater Schlüssel erzeugt wurde, und die Fingerprint-Nachprüfung (102) einen Schritt des Entschlüsselns der im Datenblock gefundenen digitalen Signatur mit dem öffentlichen Schlüssel des Paares öffentlicher Schlüssel/privater Schlüssel umfasst, wobei der öffentliche Schlüssel sich gegebenenfalls in Metadaten des Datenblocks befindet.

16. Computerprogrammprodukt, das Programmdateiabschnitte umfasst, die auf einem computerlesbaren Medium gespeichert sind, um die Schritte des Verfahrens nach einem der Ansprüche 1 bis 15 zu implementieren.

17. Computerprogrammprodukt nach Anspruch 16, wobei mindestens ein Teil des Programms in einem der Datenblöcke (4) enthalten ist.

18. Satz von Dateien, die jeweils auf einem computerlesbaren Medium gespeichert sind, wobei jede Datei einen digitalen Fingerprint enthält, der die Datei identifiziert, wobei der identifizierenden Fingerprint der Datei in der Datei unter Verwendung einer Verweismarkierung lokalisierbar ist, und der identifizierende Fingerprint der Datei einen Wert hat, der durch Anwenden einer Fingerprint-Berechnungsfunktion auf die Datei berechnet ist, wobei der Wert des identifizierenden Fingerprints von jedem der Bits der Datei unter Ausschluss der Bits des identifizierenden Fingerprints der Datei, der in der Datei vorliegt, abhängig ist, sodass die Integrität jeder Datei des Dateisatzes mithilfe des Verfahrens nach einem der Ansprüche 1 bis 15 nachprüfbar ist, wenn jede Datei als ein Datenblock angesehen wird.

19. Satz nach Anspruch 18, wobei mindestens eine der Dateien eine Referenzverknüpfung umfasst, die ausgehend von einem identifizierenden Fingerprint einer anderen Datei des Satzes gebildet ist, wobei die Referenzverknüpfung in einer der Dateien des Satzes vorkommt und durch reversibles Modifizieren eines der identifizierenden Fingerprints der Dateien des Satzes, um die Referenzverknüpfung von den identifizierenden Fingerprints zu unterscheiden, erhalten wird.

20. Satz nach einem der Ansprüche 18 und 19, der eine Verknüpfungsdatei umfasst, die zwei Referenzverknüpfungen enthält, die ausgehend von identifizierenden Fingerprints zweier anderer Dateien des Satzes gebildet sind, um eine Verknüpfung zwischen den beiden anderen Dateien herzustellen.

## Claims

1. Method for verifying the integrity of a block of digital data, the method comprising the steps of:
searching, in a first data block (4), for a digital identification fingerprint of the first data block (4), by means of a first marker (7), if the identification fingerprint (2) of the first data block is found in the first data block, calculating a digital fingerprint of the first data block by applying a fingerprint calculation function to the first data block, the calculated fingerprint of the first data block having a value dependent on each of the bits of the first data block excluding the bits of the identification fingerprint (2) found in the first data block, and verifying the identification fingerprint found in the first data block by comparing it with the calculated fingerprint of the first data block, a false comparison revealing that the first data block has changed since the identification fingerprint was inserted into the first data block, or that the identification fingerprint was calculated by applying a different fingerprint calculation function to the first data block.

2. Method according to claim 1, wherein the first data block comprises a reference link formed from a different identification fingerprint present in a second data block, and having a value dependent on each of the bits of the second data block excluding the bits of the different identification fingerprint.

3. Method according to either claim 1 or claim 2, comprising the steps of:
searching, in a third data block, for a digital identification fingerprint (2) of the third data block (4), by means of a second marker (7), if the identification fingerprint of the third data block is found in the third data block, calculating a digital fingerprint (2) of the third data block by applying the fingerprint calculation function to the third data block, the calculated fingerprint of the third data block having a value dependent on each of the bits of the third data block excluding the bits of the identification fingerprint found in the third data block, and inputting the calculated fingerprint of the third data block into the third data block at a location determined by the second marker in the third data block.

4. Method according to any of claims 1 to 3, comprising steps for generating a verifiable data block, consisting of:
searching for a fingerprint insertion location in an initial data block (3), by means of a third marker, calculating a third digital fingerprint (2) of the verifiable data block by applying the fingerprint calculation function to the initial data block, the third calculated fingerprint of the verifiable data block having a value dependent on each of the bits of the initial data block, and generating the verifiable data block by inputting the third calculated fingerprint of the verifiable data block as the identification fingerprint of the verifiable data block at the insertion location found in the initial data block.

5. Method according to any of claims 1 to 4, wherein the calculation of each fingerprint (2) comprises a step of inserting a predefined piece of data (8) into the data block before applying the fingerprint calculation function to the data block.

6. Method according to any of claims 1 to 5, wherein a data block comprises an identification fingerprint input at a plurality of locations in the data block, the identification fingerprint of the data block being calculated by excluding the bits of the identification fingerprint in all the locations of the identification fingerprint in the data block.

7. Method according to any of claims 3 to 5, comprising several steps of calculating a fingerprint of a data block and of inputting the calculated fingerprint into the data block while keeping the fingerprints already inserted in the data block.

8. Method according to any of claims 1 to 7, comprising a step of reading information useful for locating and/or calculating an identification fingerprint (2), which information is contained in a data block (4) containing the identification fingerprint.

9. Method according to any of claims 2 to 8, wherein the reference link formed from the identification fingerprint present in the second data block makes it possible to construct at least part of the identification fingerprint present in the second data block.

10. Method according to any of claims 1 to 9, wherein one of the data blocks comprises a piece of metadata comprising a variable part excluded from the fingerprint calculation applied to the data block in order to calculate the identification fingerprint of the data block.

11. Method according to claim 10, wherein the identification fingerprint of the data block is located in the variable part of a piece of identification metadata.

12. Method according to any of claims 1 to 11, wherein at least part of the identification fingerprint input into each data block is used by an indexing engine or as a search keyword by a search engine.

13. Method according to any of claims 1 to 12, wherein one of the data blocks (4) is at least part of an executable code file of a program, and the identification fingerprint (2) of the data block, calculated on the data block, is input into the data block at a location allowing the program to use the identification fingerprint of the data block.

14. Method according to any of claims 1 to 13, wherein each identification fingerprint (2) is input into a data block (4) at a location in the data block which is selected so as not to modify the conditions of use expected of the data block (4) by a software program.

15. Method according to any of claims 1 to 14, wherein the identification fingerprint (2) inserted into a data block is a digital signature generated by an asymmetric cryptographic calculation using a private key of a pair of public/private keys, and the fingerprint verification (102) comprises a step of decrypting the digital signature found in the data block with the public key of the pair of public/private keys, the public key possibly being located in a piece of metadata of the data block.

16. Computer program product comprising portions of a program file recorded on a computer-readable medium, for carrying out the steps of the method according to any of claims 1 to 15.

17. Computer program product according to claim 16, wherein at least part of the program is included in one of the data blocks (4).

18. Set of files each recorded on a computer-readable medium, wherein each file contains a digital identification fingerprint of the file, the identification fingerprint of the file being locatable in the file by means of a marker, the identification fingerprint of the file having a value calculated by applying a fingerprint calculation function to the file, the value of the identification fingerprint being dependent on each of the bits of the file excluding the bits of the identification fingerprint of the file, which is present in the file, and the integrity of each file of the set of files being verifiable using the method according to any of claims 1 to 15, and each file being considered to be a data block.

19. Set according to claim 18, wherein at least one of the files comprises a reference link formed from an identification fingerprint of another file of the set, the reference link being in one of the files of the set and being obtained by reversibly modifying one of the identification fingerprints of the files of the set in order to distinguish the reference link from the identification fingerprints.

20. Set according to either claim 18 or claim 19, comprising a link file containing two reference links formed from identification fingerprints of two other files of the set in order to establish a link between the other two files.
